# EUROPEAN PATENT SPECIFICATION

(11) **EP 0 762 792 B1**
(45) Date of publication and mention of the grant of the patent: **30.12.2009**
(21) Application number: 96113094.5
(22) Date of filing: 14.08.1996
(51) Int. Cl.: H04W 48/12

(54) **Call reception control method for digital mobile telephone**
Steuerungsverfahren für Anrufsempfang für digitales mobiles Telefongerät
Méthode de commande de réception d'un appel pour téléphone mobile numérique

(30) Priority: 29.08.1995 JP 24374695
(43) Date of publication of application: 12.03.1997
(73) Proprietor: Kabushiki Kaisha Kenwood, Hachiouji-shi, Tokyo 192-8525 (JP)
(72) Inventor: Hori, Hiroyuki, Machida-shi, Tokyo (JP); Masuda, Takashi, Yokohama-shi, Kanagawa (JP); Serizawa, Gorou, Kawasaki-shi, Kanagawa (JP)
(74) Representative: Leinweber & Zimmermann

(56) References cited:
- WO-A-94/17643
- WO-A-95/07010

## Description

### BACKGROUND OF THE INVENTION

### 1. Field of the Invention

The present invention relates to a call reception control method for a digital mobile telephone and more particularly to a call reception control method for a digital mobile telephone capable of providing a stable and speedy call reception control.

### 2. Related Background Art

In a digital mobile telephone system, a mobile telephone receives radio waves from a base station and executes a predetermined operation. There are partially overlapped zones covered by a plurality of base stations distributed at various areas. If a mobile telephone is in the overlapped area of a plurality of zones, a zone transfer and a channel selection are executed for realizing communications with the optimum base station.

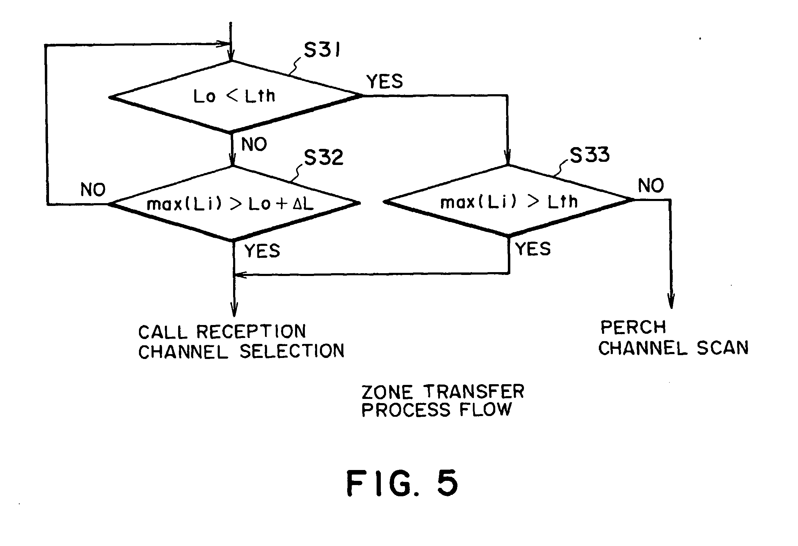

A zone transfer process of a conventional call reception control method for a digital mobile telephone is illustrated in Fig. 5. The zone transfer process will be described by using L0 as a current reception level of a subject station slot of a mobile telephone contained in a super frame transmitted from a base station, L1 to Ln (maximum level being max (Li)) as a reception level of adjacent n zones, Ltn as a call reception permission level, and Lth as a call reception degradation level, and by setting a zone transfer level difference ΔL to (Ltn - Lth) or larger.

First, it is checked whether L0 is smaller than Lth (Step S31), and if not , it is checked whether max (Li) is larger than (L0 + ΔL) (Step S32). If larger, the call reception channel is selected, whereas if not larger, the flow returns to the process of Step S31. If L0 is smaller than Lth at Step S31, it is checked whether max (Li) is larger than Lth (Step S33), and if larger the call reception channel is selected, whereas if not larger, a perch channel is scanned.

In a conventional call reception control method for a digital mobile telephone, even in a roaming inhibition network wherein the peripheral area of a presently waiting channel (cell) is under a maintenance restriction or the channel has received a position registration NG (position registration inhibition position number), it is judged from the RSSI level representative of the reception radio wave level of the base station whether a transfer to an adjacent channel is to be performed.

Therefore, if the RSSI level at an adjacent channel becomes larger than the RSSI level at the subject station by a preset value, it is judged that the quality has degraded, and the transfer to the adjacent channel is performed. However, under the above-described conditions, a call reception at the roaming site cannot be allowed so that the original channel resumes. At the original channel, however, the quality degradation occurs like the case described above, and a hand-over phenomenon occurs which repeats transfer.

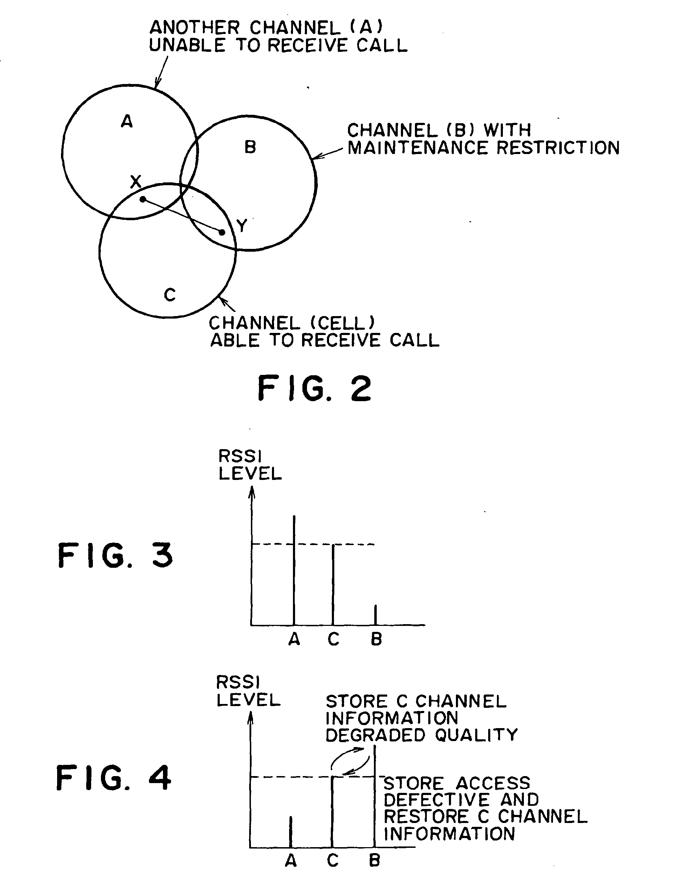

For example, as shown in Fig. 2, consider three zones partially overlapping, including another channel A zone unable to receive a call, a channel B zone with maintenance restriction, and a channel (cell) C zone able to receive a call. In this case, if the RSSI levels of the channels at a point Y are as shown in Fig. 4, the perch scan is executed to receive a call over the channel B. However, since the channel B has maintenance restriction and is registered as an unaccessible channel, the activation is shifted to the channel C having the next higher level. Since the RSSI level of the channel C is low, a transfer to the channel B is performed and a transfer operation is repeated. Therefore, the stable and speedy call reception control is impossible.

Document WO95/0701 describes a call reception method by receiving broadcast information with reliability information, scanning and activating channels in order to receive the broadcast information with reliability information and compiling a list based on such information.

### SUMMARY OF THE INVENTION

It is an object of the present invention to provide a call reception control method for a digital mobile telephone capable of providing a stable and speedy call reception control even if an access defective channel exists such as maintenance restriction, position registration NG, and roaming inhibition network.

In order to solve the above problem, the present invention provides a call reception control method for a digital mobile telephone for performing a call reception operation according to claims 1-3.

### BRIEF DESCRIPTION OF THE DRAWINGS

Fig.1 is a flow chart illustrating an operation procedure of the call reception control method for a digital mobile telephone according to an embodiment of the present invention.
Fig. 2 is a diagram illustrating a particular operation of the call reception control method for a digital mobile telephone of the embodiment.
Fig. 3 is a diagram illustrating a particular operation of the call reception control method for a digital mobile telephone of the embodiment.
Fig. 4 is a diagram illustrating a particular operation of the call reception control method for a digital mobile telephone of the embodiment and a conventional case.
Fig. 5 is a flow chart illustrating a conventional zone transfer process for a digital mobile telephone.

### DETAILED DESCRIPTION OF THE PREFERRED EMBODIMENTS

An embodiment of the invention will be described with reference to the accompanying drawings.

In this embodiment, a memory of a mobile telephone can store various information of all perch channels, and the call reception control is executed to obtain an optimum perch in accordance with the stored information. The various information is information representative of a channel validity. For example, the information includes a valid channel, a channel with a network number not registered in ID, a channel which cannot be synchronized, a channel with a level insufficient for call reception, and a channel with restriction (access defective channel).

When the power to the mobile telephone is turned on, all perch channels are first dealt as valid. After the perch scan, the perch channel is activated (synchronized) starting from the channel having a highest RSSI level. If the network number in the broadcast information of the first activated channel does not coincide with the ID information (accessible network number) of the mobile telephone, the mobile telephone stores this perch channel in a memory to indicate that the channel is access defective, and thereafter, the channel having the next highest RSSI level is activated. If the information (broadcast information) of the activated channel coincides with the ID information of the mobile telephone, the mobile telephone enters a call reception state.

As the mobile telephone enters the call reception state, the radio wave intensity (RSSI level) of adjacent channels of the presently waiting channel is measured in response to an instruction (broadcast information) from the network. In this case, there is a possibility that the adjacent channels may include the previously activated channels. However, these channels have been stored in the memory as access defective channels so that the quality of the mobile telephone relative to these channels is not degraded.

If the mobile telephone moves and the RSSI level of the adjacent channel becomes stronger than the presently waiting channel, the quality of the mobile telephone is degraded because the channel is not still stored in the memory, and the channel is activated. The information of the channel is compared with ID of the mobile telephone, and if it is judged that the channel is unable to receive a call, the mobile telephone stores the channel in the memory as the new access defective channel, and the previously waiting channel is again activated to enter a call reception state. In this manner, the mobile telephone can always capture an optimum channel capable of receiving a call.

A particular operation of the call reception method for a digital mobile telephone according to the embodiment of the invention will be described with reference to Figs. 2 to 4.

Referring to Fig. 2, if the RSSI levels at an X point have the relationship shown in Fig. 3, the mobile telephone first activates the channel A. However, since the channel A is another channel unable to receive a call, this channel is stored in the memory as an access defective channel, and the channel C having the next higher RSSI level is activated. Since the channel C can receive a call, the mobile telephone enters the call reception state at this channel C.

Next, as the mobile telephone moves from the point X to the point Y, and if the RSSI levels have the relationship shown in Fig. 4, the mobile telephone activates the channel B having the highest level. However, since the channel B is the access defective channel, it is stored in the memory as the access defective channel, and then the channel C having the next higher level is activated. Since the channel B is being stored in the memory as the access defective channel, the mobile telephone enters the call reception state at this channel C even if the RSSI level difference between the channels B and C is a zone transfer level difference or larger.

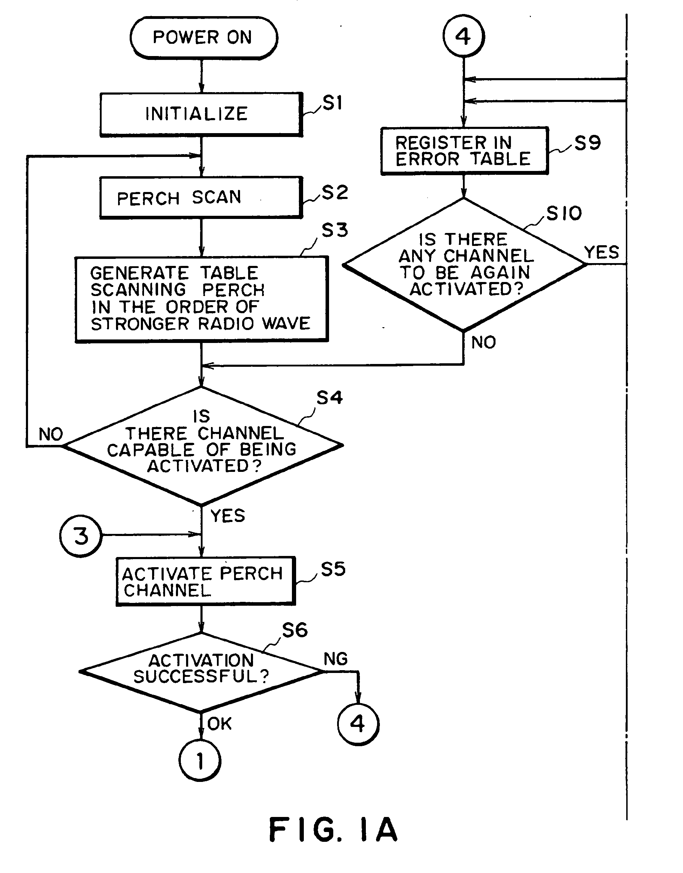

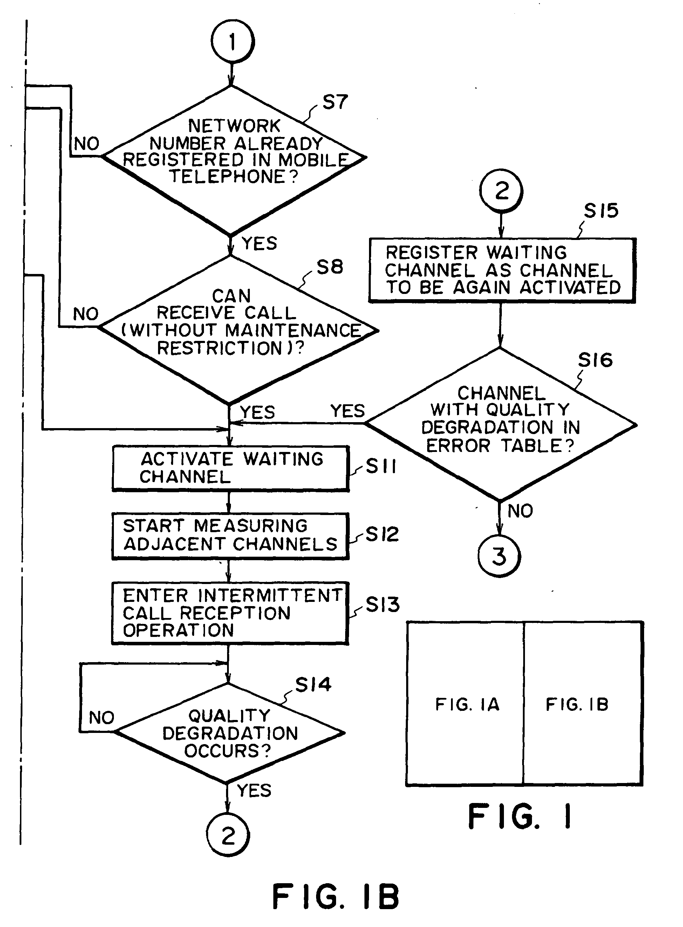

Fig.1 is a flow chart illustrating an operation procedure of the call reception control method for a digital mobile telephone of the embodiment.

After the power is turned on, initialization is first performed (Step S1), a perch scan is executed (Step S2), and a table is generated for storing access defective information by scanning each perch channel in the order of stronger radio wave (higher RSSI level) (Step S3). Next, it is checked if there is any channel capable of being activated (Step S4). If not, the flow returns to the process of Step S2, whereas if there is any channel, this perch channel is activated (Step S5) and it is checked if the activation is successful (Step S6). If successful, it is checked whether the network number has been registered or not (Step S7). If registered, it is judged whether the perch channel can receive a call (without maintenance restriction) (Step S8).

If not successful at Step S6, if it is judged at Step S7 that the network number has not been registered, or if it is judged at Step S8 that a call cannot be received, the information to these effects are registered in an error table (Step S9), and it is checked whether there is any channel to be again activated. If not, the flow returns to the process of Step S4, whereas if there is any channel or if it is judged at Step S8 that a call can be received, a call reception channel is activated at Step S11.

After the process of Step S11, the levels of the adjacent channels start being measured (Step S12), and an intermittent call reception operation is activated (Step S13). In this state, any occurrence of quality degradation is monitored (Step S14), and if a quality degradation occurs, the waiting channel is registered as a channel to be again activated (Step S15). It is next checked whether a channel with quality degradation is being registered in the error table (Step S16), and if registered, the flow returns to the process of Step S11, whereas if not registered, the flow returns to the process of Step S5.

As described so far according to the call reception control method for a digital mobile telephone of this invention, a wasteful hand-off occurs less so that a speedy call reception is possible. Furthermore, since the mobile telephone is always in a stable state, the call reception factor can be improved. Still further, maintenance works can be performed without any fear at the area where there are adjacent channels (cells), and so the maintenance of a network can be improved considerably.

## Claims

1. A call reception method for a digital mobile telephone for performing a call reception operation by receiving broadcast information from a base station and selecting one of a plurality of perch channels as a call reception channel, the call reception method comprising the steps of :
scanning the perch channels by the digital mobile telephone and thereafter activating each of the perch channels in a predetermined order to receive broadcast information from the base station of the activated perch channel;
judging whether or not a network number contained in the broadcast information received from the base station coincides with a network number contained in ID information owned by the digital mobile telephone; and
registering in an error table the base station for the network number which has been judged not to coincide with the network number contained in the ID information as a perch channel unable to receive a call so that the perch channel is selected on the basis of information registered in the error table.

2. The call reception method according to claim 1, wherein the scanning of the perch channels is performed in the order of higher reception level.

3. The call reception method according to claim 1, wherein if the network number contained in the broadcast information received from the base station coincide with the network number contained in ID information owned by the digital mobile telephone, it is judged whether or not that channel is a channel with maintenance restriction or a channel received a position NG, and if that channel is either the channel with maintenance restriction or the channel received a position NG, the base station of that network number is registered in the error table as a perch channel unable to receive a call.

## Patentansprüche

1. Anrufsempfangsverfahren für ein digitales mobiles Telefon zwecks Durchführens eines Anrufsempfangsvorgangs durch Empfangen ausgestrahlter Informationen aus einer Basisstation und Auswählen eines aus einer Mehrzahl von Perch-Kanälen als Anrufsempfangskanal, wobei das Anrufsempfangsverfahren die Schritte umfasst:
Abtasten der Perch-Kanäle durch das digitale mobile Telefon und danach Aktivieren jedes der Perch-Kanäle in einer vorgegebenen Reihenfolge, um ausgestrahlte Informationen aus der Basisstation des aktivierten Perch-Kanals zu empfangen;
Beurteilen, ob oder nicht eine Netzwerknummer, die in den aus der Basisstation empfangenen ausgestrahlten Informationen enthalten ist, mit einer Netzwerknummer übereinstimmt, die in ID-Informationen enthalten ist, die das digitale mobile Telefon besitzt; und
Registrieren, in einer Fehlertabelle, der Basisstation hinsichtlich der Netzwerknummer, über die geurteilt worden ist, dass sie nicht mit der in den ID-Informationen enthaltenen Netzwerknummer übereinstimmt, als Perch-Kanal, der nicht in der Lage ist, einen Anruf zu empfangen, so dass der Perch-Kanal auf Grundlage von in der Fehlertabelle registrierten Informationen ausgewählt wird.

2. Anrufsempfangsverfahren nach Anspruch 1, wobei das Abtasten der Perch-Kanäle in der Reihenfolge der höheren Empfangsfeldstärke vorgenommen wird.

3. Anrufsempfangsverfahren nach Anspruch 1, wobei, falls die Netzwerknummer, die in den aus der Basisstation empfangenen ausgestrahlten Informationen enthalten ist, mit der Netzwerknummer übereinstimmt, die in ID-Informationen enthalten ist, die das digitale mobile Telefon besitzt, beurteilt wird, ob oder nicht dieser Kanal ein Kanal mit Aufrechterhaltungs- bzw. Wartungsbeschränkung oder ein Kanal ist, der ein Positions-NG empfangen hat, und falls dieser Kanal entweder der Kanal mit Aufrechterhaltungs- bzw. Wartungsbeschränkung oder der Kanal ist, der ein Positions-NG empfangen hat, die Basisstation mit jener Netzwerknummer in der Fehlertabelle als Perch-Kanal registriert wird, der nicht in der Lage ist, einen Anruf zu empfangen.

## Revendications

1. Méthode de réception d'appel pour téléphone mobile numérique visant à la réalisation d'une opération de réception d'appel par la réception d'informations de diffusion provenant d'une station de base et la sélection d'un canal parmi une pluralité de canaux en tant que canal de réception d'appel, la méthode de réception d'appel comprenant les étapes suivantes : balayage des canaux de perche par le téléphone mobile numérique puis activation de chacun des canaux de perche dans un ordre prédéterminé afin de recevoir des informations de diffusion en provenance de la station de base du canal de perche activé ;
évaluation si oui ou non un numéro de réseau contenu dans les informations de diffusion reçues en provenance de la station de base coïncide avec un numéro de réseau contenu dans des informations d'identification appartenant au téléphone mobile numérique ; et
l'enregistrement, dans un tableau de détection d'erreurs, de la station de base relative au numéro de réseau dont il a été évalué qu'il ne coïncidait pas avec le numéro de réseau contenu dans les informations d'identification, en tant que canal de perche inapte à recevoir un appel de sorte que le canal de perche soit sélectionné au regard des informations enregistrées dans le tableau de détection d'erreurs.

2. Méthode de réception d'appel selon la revendication 1, dans laquelle le balayage des canaux de perche est réalisé par ordre croissant de niveau de réception.

3. Méthode de réception d'appel selon la revendication 1, dans laquelle, si le numéro de réseau contenu dans les informations de diffusion reçues en provenance de la station de base coïncide avec le numéro de réseau contenu dans les informations d'identification appartenant au téléphone mobile numérique, il est évalué si oui ou non le canal est un canal à une restriction relevant de l'entretien ou un canal ayant reçu un NG de position, et dans le cas où ce canal serait soit le canal à une restriction relevant de l'entretien, soit le canal ayant reçu un NG de position, la station de base de ce numéro de réseau est enregistrée dans le tableau de détection d'erreurs en tant que canal de perche inapte à recevoir un appel.
